# EUROPEAN PATENT SPECIFICATION

(11) **EP 1 807 600 B1**
(45) Date of publication and mention of the grant of the patent: **02.06.2010**
(21) Application number: 05801627.0
(22) Date of filing: 19.10.2005
(51) Int. Cl.: E06B 9/72, H02K 17/30, H02K 11/00

(54) **GEARMOTOR FOR ROLL-UP SHUTTERS**
GETRIEBEMOTOR FÜR ROLLTOR
MOTEUR A ENGRENAGES POUR VOLETS A ENROULEMENT

(30) Priority: 22.10.2004 IT TV20040119
(43) Date of publication of application: 18.07.2007
(73) Proprietor: NICE SpA, 31046 Oderzo (Treviso) (IT)
(72) Inventor: MARCHETTO, Oscar, I-31046 Oderzo (Treviso) (IT)
(74) Representative: Agostini, Agostino
(86) International application number: PCT/EP2005/055358
(87) International publication number: WO 2006/045724

(56) References cited:
- WO-A-2004/015235
- DE-A1- 3 346 242
- DE-U1- 29 804 060
- DE-U1- 29 911 261
- FR-A- 2 149 395
- FR-A- 2 822 602

## Description

The invention relates to a gearmotor for roll-up shutters.

The tubular gearmotors for moving and/or automating roll-up shutters, such as external shutters, window blinds and curtains are currently designed such that they may be inserted inside a winding drum onto which the said shutter is wound (and unwound). They comprise mainly an electric motor, a speed reducer and a capacitor, which are housed inside a metallic tubular body. A pulley for transmitting the rotational movement from the gearmotor to the winding drum is provided at one end of the metallic tubular body. In the region of the other end of the tubular body it is envisaged effecting the rigid connection of a part (head-piece) shaped so as to contain the (mechanical or electronic) end-of-travel position regulator. This head-piece is rigidly connected using suitable fixing means to the wall or to the support where present. For this purpose a series of metal brackets or adaptors are provided, depending on the type of application. A pulley is also envisaged for transmitting the rotational movement of the winding drum to the (mechanical or electronic) system for adjusting the end-of-travel positions. Electric conductors are situated between the parts inside the tubular body and those inside the head-piece so as to ensure the necessary functional capacity.

The gearmotors for roll-up shutters differ mainly in terms of their technical characteristics, the performance features provided and the type of use. In particular they may be produced for window blinds or sun awnings, with or without a central operating unit and radio-control receiver, with a mechanical or electronic system for adjusting the end-of-travel stops, with or without emergency operation, etc. Since different variants which satisfy different types of use must be envisaged for the same gearmotor, it has been necessary to provide overall numerous different versions, with consequent huge final production costs. All this results in the design, production and storage of large numbers of gearmotors with essentially the same technical characteristics.

The gearmotors which are currently produced and marketed consist of a "single body" which is inserted inside a winding tube. Maintenance of the gearmotor requires either complete disassembly of the roll-up shutter and complete replacement of the gearmotor, in the case of a fault requiring the intervention of a specialized centre, or complete disassembly of the gearmotor on-site in the case of minor faults. In any case, in order to ensure that the roll-up shutter is operative, the installation operator is obliged to mount a provisional gearmotor or leave the roll-up shutter in manual activation mode.

The patent application WO2004/015235 envisages providing a gearmotor for roll-up shutters having an interchangeable electronic board for controlling said gearmotor. Since access to the electronic board is difficult and complex, it is usually required to perform disassembly of said gearmotor and in particular the metallic tubular element. The main object is that maintenance of the board over time should not necessarily require complete disassembly of the gearmotor and the roll-up shutter connected to it. The solution adopted envisages that the electronic control board is housed inside the head-piece of the gearmotor, which comprises a special seat for the board. The board is designed to be extractable, is protected by a removable cover and is connected to the other components of the gearmotor by means of pins which ensure removability of the board. Replacing easily only the board does not solve, however, the abovementioned problem of the large numbers of gearmotors.

The main object of the present invention is to reduce the large series of gearmotors having the same technical characteristics but different electric/electronic components, with the advantage of facilitating, simplifying and speeding up production and storage of the said gearmotors.

Another object of the invention is to allow, in particular variants of the invention, the replacement of the head-piece of a gearmotor with another one, irrespective of the production characteristics of the manufacturers and the components used in the gearmotor.

These objects are achieved with a gearmotor which comprises adapting means, or a separate adaptor, so that the head-piece is interchangeable with respect to the body, in particular in the case where the head-piece comprises either an electronic or a mechanical regulator.

This means that, once the functional connections have been defined so that the head-piece and body may be combined correctly, also depending on the components contained in the body (type of motor, type of reducer, etc.) and in the head-piece (type of end-of-travel regulator, etc.), then an adapting structure for the head-piece and body connections is defined (number of connections, arrangement, type, function, etc.). This may advantageously be performed independently of the secondary characteristics of the components contained in the body (motor capacity, type of power supply, etc.) and in the head-piece (for example encoder, remote-control receiver, emergency operation mechanism, start-up capacitor, etc.).

After defining the (logical and/or physical) structure of the functional connections, one or more connectors or coupling devices are used to obtain a functional connection between the components which are contained in the body and in the head-piece and which are thus functionally adapted to each other and may function simultaneously and together.

Very advantageously, this functional connection may be separated easily and rapidly in order to simplify as far as possible the operations involving assembly or replacement of the head-piece or the body.

The connectors may comprise standard or specially designed connectors, fasteners or dedicated connecting devices, while as coupling devices, understood here as means which effect a contact-free connection, it is possible to use photo-couplers, couplers with a capacitive action by means of two spaced plates or couplers which use radio or infrared transmission. In these latter cases it may also be required to establish a protocol for communication between the coupling devices (as, for example, in the case of a multiplexed serial data transmission via cable or radio between head-piece and body).

The said adapting means may adapt a number of connections of the head-piece which is identical to the number of connections of the body, or a different number, (for example in the case of an identical or different number of cables from the head-piece and body, which must be adapted). In the second case, however, which is less advantageous, in addition to ordered and consistent adaptation of the connections, it may be necessary to adapt two or more connections to a single connection.

With the invention, therefore, the head-piece of the gearmotor may be rendered perfectly separable from the body and interchangeable and vice versa.

With the gearmotor according to the invention it is possible to achieve a drastic reduction in the number of different gearmotors since, by envisaging the positioning of the electronic, electric and mechanical components inside the head-piece or inside the body of the gearmotor, it is required to replace only one of the two parts in order to modify the technical characteristics thereof. Moreover, the said head-piece may be used with bodies having different characteristics. By way of example, in the case where the head-piece of a gearmotor has inside it the end-of-travel regulator, the electronic control unit and a remote-control receiver as well as a device for emergency operation, a single head-piece may replace at least three current series of gearmotors. It is sufficient, in fact, to couple it to the desired bodies in order to obtain a complete gearmotor.

This results in considerable savings in terms of the cost of production and management of the gearmotors.

In the case where the proprietor of a gearmotor for roll-up shutters wishes to modify some of its characteristics (for example, changing from an electronic to a mechanical end-of-travel system or vice versa), it is possible to avoid the major costs associated with assembly or disassembly of the gearmotor as well as perform a vast range of modifications.

It can be easily understood how, as a result of the gearmotor according to the invention, it is possible to replace easily and rapidly even only a part of the gearmotor, advantageously only the head-piece which may determine the characteristics thereof. All this offers the possibility of modifying completely only part of the gearmotor, for example by redesigning and redeveloping the head-piece alone which will contain the control members.

The advantages and characteristic features of the present invention will emerge more clearly from the following description of an embodiment, to be regarded only by way of example and as not limiting in any way. The description refers to the accompanying drawing in which:
Fig. 1 shows a partial side view of a gearmotor according to the invention in the assembled configuration;
Fig. 2 shows a partial side view of the gearmotor according to Fig. 1 in the non-assembled configuration, and connectors;
Fig. 3 shows a partial side view of the gearmotor according to Fig. 1 in the non-assembled configuration and a radiowave connection;
Fig. 4 shows a three-dimensional view of a head-piece of a gearmotor according to a variant of the invention;
Fig. 5 shows a three-dimensional view of a body of a gearmotor according to a variant of the invention.

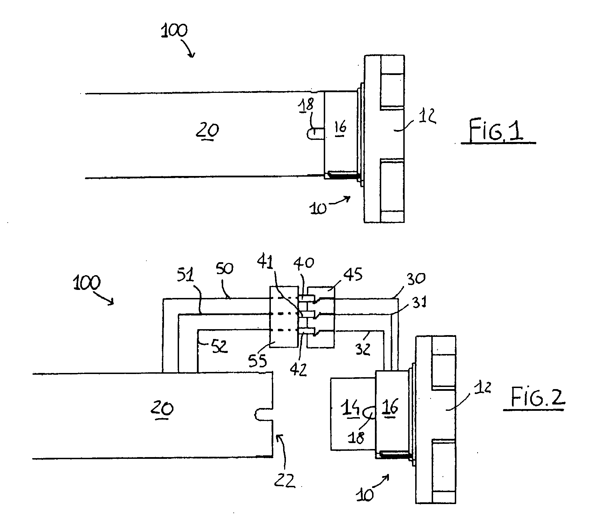

With reference to the accompanying drawings, a gearmotor is denoted by 100 and is composed of a tubular body 20 and a head-piece 10 which are assembled together (cf. Fig. 1). The tubular body 20 contains an electric motor, a speed reducer and a capacitor (all not shown), while the head-piece 10 contains at least one (mechanical or electronic) end-of-travel regulator (not shown). Optionally the head-piece may contain many components in addition to the end-of-travel devices, for example encoders, a remote-control receiver and an emergency operation mechanism, etc.

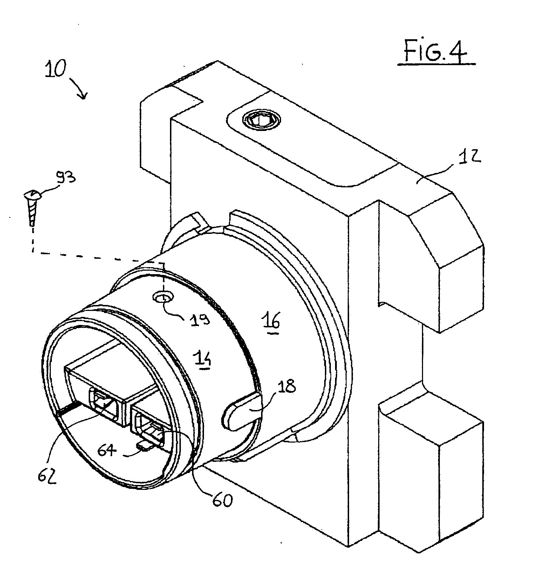

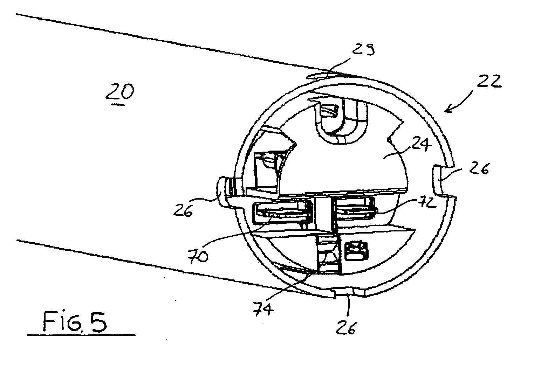

The head-piece 10 (see Fig. 4) comprises a fixing plate 12 which is useful for mounting a fixing adaptor to the wall and from which there extends a base 16 for a male coupling element 14 which has a substantially cylindrical shape and which is inserted into one end 22 of the tubular body 20 (cf. Fig. 5).

The element 14 is provided at the free end with a pair of electric sockets 60, 62 having plate-type contacts of known design which, when the head-piece 10 and the body 20 are assembled together, receive pins 70, 72 present on a female coupling element 24 arranged at the end 22 of the body 20. A male terminal 64 is situated dose to the sockets 60, 62, said terminal, when the gearmotor 100 is assembled, being inserted into a corresponding visible plate-type female socket 74 located on the element 24 of the body 20.

The set of sockets 60, 62, 64 and pins 70, 72, 74 form a system for adapting the electrical connections of the head-piece 10 and the body 20, allowing the transmission of the electric power supply and/or electric signals, such as, for example, digital signals for communication between head-piece 10 and body 20. Clearly, the head-piece 10 and the body 20 will have, inside them, conductors (cables, PCB tracks, etc.) which are connected to the sockets 60, 62, 64 and to the pins 70, 72, 74 so as to connect together the components contained in the body 20 and in the head-piece 10.

Depending on the different requirements for obtaining a functional connection between the components contained in the body 20 and in the head-piece 10, it is possible to distribute, increase or decrease male or female sockets on the element 24 of the body 20 or on the element 14 of the head-piece 10.

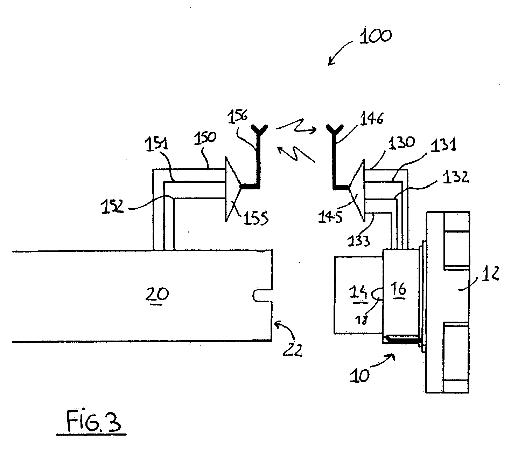

As is clear from the figures, the head-piece 10 is designed so that it may be easily and quickly assembled (and disassembled) onto/from the body 20. The side surface of the element 14 is provided with three guiding reliefs 18 (only one of which is shown) which, upon assembly, are inserted into corresponding seats 26 formed in the end 22 of the body 20. This interlocking arrangement prevents relative rotation of the head-piece 10 and the body 20. In order to prevent separation of these two elements in the assembled configuration, a fixing screw 93 is used, said screw being inserted (see broken line in Fig. 3) into a threaded hole 29 of the body 20 and screwed into a corresponding threaded seat 19 in the male element 14.

Obviously the screw system 93 for fixing the head-piece 10 to the body 20 may easily be replaced by known automatic systems (not shown) such as interlocking tongue or screw systems (formed, for example, by a threaded body 20 and head-piece 10 able to be screwed one inside the other).

It is clear that, owing to the coupling elements 14 and 24, it is possible to combine as required, according to the specific requirements of each installation operator or customer, a head-piece 10 with inside it the preferred system for adjusting the end-of-travel positions (electronic or mechanical or as already mentioned other components such as electronic boards, encoders, a remote-control receiver, etc.) and a body 20 with different rated data. Consequently it is sufficient to produce individually a limited number of head-pieces 10 or bodies 20 having precise technical characteristics and then combine them if required.

The gearmotor according to the invention therefore allows an installation operator to replace, in the event of a malfunction, only the part which is not working and perform complete assembly of the roll-up shutter without having to replace the gearmotor entirely. This results in a substantial reduction in the costs incurred by the user in the event of replacement of part of the gearmotor instead of the whole unit, a reduction in the costs incurred by the installation engineer in the event of "loan" of a temporary gearmotor. Moreover it facilitates and reduces the costs of storage and management of the repair and assistance centre since only a part and not the whole gearmotor must be managed.

Figures 2 and 3 show another embodiment of the invention. Parts with a reference number identical to that in the preceding figures are identical to those already described.

Three conductors 30, 31, 32 extend from the components (not shown) inside the element 14 and the base 16, being conveyed externally, and may be, for example, the phase wire and neutral wire of the mains power supply (which reaches the head-piece 10 via a cable - not shown) and a conductor for digital signals. Said conductors 30, 31, 32 terminate on a female connector 45 which receives three pins 40, 41, 42 of a male connector 55. Other three conductors 50, 51, 52 are connected to the pins 40, 41, 42, said conductors entering into the body 20 and terminating there on the components (not shown) contained therein.

The set of conductors 30, 31, 32, 50, 51, 52 and connectors 45, 55 form the system for adapting the functional connections between the components contained in the head-piece 10 and the body 20. In fact, the three conductors 50, 51, 52 are each associated in a unique and ordered manner with the three conductors 30, 31, 32.

It is possible to envisage multiple connectors - in particular polarized and fast-fit connectors are advantageous - for the functional connections between head-piece 10 and body 20. The way in which adaptation between the three conductors 30, 31, 32 and the three conductors 50, 51, 52 is performed depends on the type of connector or coupler used, it being fundamental that the connector ensures (see Fig. 2) that the conductor 30 is connected to the conductor 50, the conductor 31 is connected to the conductor 51 and so on, namely the functional connection structure is respected.

Fig. 3 shows another embodiment of the invention. Again, parts with a reference number identical to that in the preceding figures are identical to those already described. In particular four conductors 130, 131, 132, 133 leading externally from the element 14 and the base 16 are now present, said conductors being intended for example for diagnostic signalling of a fault in the motor contained inside the body 20 (here the head-piece 10 and body 20 are supplied separately, via cables, not shown, or by accumulators). Said conductors 130, 131, 132, 133 terminate on a transmitter/receiver 145 equipped with an antenna in radio communication with a transmitter/receiver 155 equipped with antenna 156. Three conductors 150, 151, 152 which enter into the body 20 and terminate there on the components (not shown) contained therein are connected to the transmitter/receiver 155.

Again the set of conductors 130, 131, 132, 133, 150, 151, 152 and transmitters/receivers 145, 155 form the system for adapting the functional connections between the components contained in the head-piece 10 and in the body 20. The signals present on the three conductors 150, 151, 152 must be associated in a unique and ordered manner with the signals present on the four conductors 130, 131, 132, 133. This means that the transmitters/receivers 145, 155 must also act as a "routing" or "switching" system for these signals (for example by means of suitable modulation/demodulation in the transmitters/receivers 145, 155) or must be equipped, for example, with converters for adapting in a functionally appropriate manner the signals present on a conductor (for example the signal 150) to the signals present on two or more conductors (for example 130 and 131). For these converters it is also possible to use a microprocessor or a data processing unit.

The head-piece 10, respecting the structure of the functional connections of the body 20, is therefore interchangeable with respect to the latter and vice versa. It is clear that this allows one to combine as desired, according to the specific requirements of each installation operator or customer, a head-piece 10 having inside it a preferred end-of-travel regulator (electronic or mechanical or other components such as electronic boards, encoders, a remote-control receiver, an emergency operation mechanism, etc.) and a body 20 with different rated data. Consequently it is sufficient to produce individually a single series of head-pieces 10 or bodies 20 with precise technical characteristics, define at least one structure for the functional connections and provide an adapting system (for example with a series of suitable connectors or couplers) which can then be combined where required. The set of connectors or couplers may form an integral part of the head-piece and the body or form a separate component which is mounted between two elements.

Therefore the objects of the invention are fully achieved in that it is no longer necessary to produce a gearmotor for each possible combination of end-of-travel and driving systems. Moreover, in the case where some of the products are unsold, these consist of solely the head-pieces of the gearmotors and not the complete gearmotors, with a considerable saving for the manufacturers.

Obviously the invention may also be extended to non-tubular gearmotors, namely gearmotors used to operate not only window blinds or the like, but also other elements (doors, gates, screens, etc.).

Moreover the functional connections between head-piece and body may also include mechanical connections, for example for transmission of a rotational movement from the body to the head-piece. The adapting system could be achieved, for example, by means of a coupling device of the male/female type for a transmission shaft which transmits a rotational movement proportional to the revolutions of the motor from the body to the head-piece or by means of the coupling of two magnets. This rotational movement could be used for safety systems or blocking systems or brakes.

As already mentioned, the adapting means may form part of a separate adaptor (not shown), i.e. an independent component. This adaptor is able to render interchangeable a gearmotor head-piece 10 assembled with a body 20 of a gearmotor, so as to form a complete and functional gearmotor, whether said head-piece comprises at least either an electronic regulator for the end-of-travel positions of the roll-up shutter or a mechanical regulator, or also other components such as electronic boards, encoders, a remote-control receiver, an emergency operation mechanism, etc. Therefore, the adaptor is positioned between body 20 and head-piece 10 and will establish via suitable adapting means (such as those already described) the functional connections between head-piece 10 and body 20.

## Claims

1. Gearmotor (100) for roll-up shutters, comprising:
- an electric motor;
- a speed reducer;
- an electronic or mechanical regulator for the end-of-travel positions of the roll-up shutter;
- a casing comprising a head-piece (10) and a body (20) which is coupled to said head-piece (10) and which houses the electric motor and the speed reducer;
**characterized in that** the head piece (10) houses at least one electric or mechanical regulator for the end-of-travel positions of the roll-up shutter, and the gearmotor (100) also comprises
adapting means (14, 24; 45, 55; 145, 155) for rendering the head-piece (10) interchangeable with respect to the body (20).

2. Gearmotor according to Claim 1, wherein said adapting means adapt a number of connections (30, 31, 32) of the head-piece identical to the number of connections (50, 51, 52) of the body.

3. Gearmotor according to Claim 1 or 2, wherein said adapting means adapt electrical connections.

4. Gearmotor according to any one of the preceding claims, wherein said adapting means adapt mechanical connections.

5. Gearmotor according to any one of the preceding claims, wherein said adapting means comprise contact connectors (45, 55).

6. Gearmotor according to Claim 5, wherein said connectors are fast-fit connectors.

7. Gearmotor according to any one of the preceding claims, wherein said head-piece (10) and said body (20) have a contact surface on which said adapting means are arranged.

8. Gearmotor according to any one of the preceding claims, wherein said adapting means are of the male/female connection type.

9. Gearmotor according to any one of the preceding claims, wherein said adapting means comprise couplers which provide a contact-free connection (145, 155).

10. Gearmotor according to anyone of the preceding claims, wherein said adapting means are arranged on a male coupling element (14) and on a corresponding female coupling element (24).

11. Gearmotor according to Claim 10, wherein said coupling elements are inserted inside one another upon assembly of the gearmotor.

12. Gearmotor according to the preceding claims, wherein fixing means (93) block the head-piece (10) and the body (20).

13. Gearmotor according to Claim 12, wherein said fixing means comprise guide reliefs (18) arranged on the head-piece (10) and/or on the body (20) and corresponding seats (26).

14. Gearmotor according to any one of the preceding claims, wherein the adapting means comprise a data processing unit.

15. Gearmotor according to any one of the preceding claims, wherein said head-piece (10) further comprises electronic boards and/or encoders and/or a remote-control receiver and/or an emergency operation mechanism.

16. Adaptor for a gearmotor (100) for roll-up shutters able to render interchangeable a gearmotor head-piece (10) assembled on a gearmotor body (20) so as to form said gearmotor, whether said head-piece comprises an electronic regulator for the end-of-travel positions of the roll-up shutters or a mechanical regulator.

17. Adaptor according to claim 16, in which said head piece (10) further comprises electronic boards and/or encoders and/or a remote control receiver and/or an emergency operation mechanism.

## Patentansprüche

1. Getriebemotor (100) für Rollläden, mit:
- einem Elektromotor;
- einem Untersetzer;
- einem elektronischen oder mechanischen Regulator für die Endanschlagspositionen der Rollläden;
- einem Gehäuse mit einem Kopfstück (10) und einem Körper (20), der an dem Kopfstück (10) gekoppelt ist und den Elektromotor und den Untersetzer aufnimmt;
**dadurch gekennzeichnet, dass** das Kopfstück (10) zumindest einen elektrischen oder mechanischen Regulator für die Endanschlagspositionen der Rollläden aufnimmt, und der Getriebemotor (100) außerdem
eine Adaptereinrichtung (14, 24; 45, 55; 145, 155) aufweist, damit das Kopfstück (10) hinsichtlich des Körpers (20) austauschbar ist.

2. Getriebemotor gemäß Anspruch 1, wobei die Adaptereinrichtung eine Anzahl an Anschlüssen (30, 31, 32) des Kopfstücks identisch der Anzahl an Anschlüssen (50, 51, 52) des Körpers adaptiert.

3. Getriebemotor gemäß Anspruch 1 oder 2, wobei die Adaptereinrichtung elektrische Anschlüsse adaptiert.

4. Getriebemotor gemäß einem der vorherigen Ansprüche, wobei die Adaptereinrichtung mechanische Anschlüsse adaptiert.

5. Getriebemotor gemäß einem der vorherigen Ansprüche, wobei die Adaptereinrichtung Kontaktstecker (45, 55) aufweist.

6. Getriebemotor gemäß Anspruch 5, wobei die Stecker Schnellstecker sind.

7. Getriebemotor gemäß einem der vorherigen Ansprüche, wobei das Kopfstück (10) und der Körper (20) eine Kontaktfläche haben, an der die Adaptereinrichtung angeordnet ist.

8. Getriebemotor gemäß einem der vorherigen Ansprüche, wobei die Adaptereinrichtung eine Stecker/Buchse-Steckverbindung ist.

9. Getriebemotor gemäß einem der vorherigen Ansprüche, wobei die Adaptereinrichtung Kopplungen aufweist, die für eine kontaktfreie Verbindung (145, 155) sorgen.

10. Getriebemotor gemäß einem der vorherigen Ansprüche, wobei die Adaptereinrichtung an einem Steckerkopplungselement (14) und an einem entsprechenden Buchsenkopplungselement (24) angeordnet ist.

11. Getriebemotor gemäß Anspruch 10, wobei die Kopplungselemente beim Montieren des Getriebemotors ineinander eingefügt werden.

12. Getriebemotor gemäß den vorherigen Ansprüchen, wobei eine Fixiereinrichtung (93) das Kopfstück (10) und den Körper (20) blockiert.

13. Getriebemotor gemäß Anspruch 12, wobei die Fixiereinrichtung eine Führungskulisse (18), die an dem Kopfstück (10) und/oder an dem Körper (20) angeordnet ist, und entsprechende Sitze (26) aufweist.

14. Getriebemotor gemäß einem der vorherigen Ansprüche, wobei die Adaptereinrichtung eine Datenverarbeitungseinheit aufweist.

15. Getriebemotor gemäß einem der vorherigen Ansprüche, wobei das Kopfstück (10) des weiteren elektronische Leiterplatten und/oder Enkoder und/oder einen Fernbedienungsempfänger und/oder einen Notbetriebsmechanismus aufweist.

16. Adapter für einen Getriebemotor (10) für Rollläden, der ein Getriebemotorkopfstück (10), das an einem Getriebemotorkörper (20) montiert ist, austauschbar macht, um so den Getriebemotor auszubilden, wobei das Kopfstück einen elektronischen Regulator für die Endanschlagspositionen der Rollläden oder einen mechanischen Regulator aufweist.

17. Adapter gemäß Anspruch 16, bei dem das Kopfstück (10) des weiteren elektronische Leiterplatten und/oder Enkoder und/oder einen Fernbedienungsempfänger und/oder einen Notbetriebsmechanismus aufweist.

## Revendications

1. Moteur à engrenages (100) pour volets à enroulement, comprenant :
un moteur électrique ;
un réducteur de vitesse ;
un régulateur électronique ou mécanique pour les positions de fin de course des volets à enroulement ;
un boîtier comprenant une pièce de tête (10) et un corps (20) qui est couplé à ladite pièce de tête (10) et qui loge le moteur électrique et le réducteur de vitesse ;
**caractérisé en ce que** la pièce de tête (10) loge au moins un régulateur électrique ou mécanique pour les positions de fin de course du volet à enroulement, et le moteur à engrenages (100) comprend également :
des moyens d'adaptation (14, 24 ; 45, 55 ; 145, 155) pour permettre d'interchanger la pièce de tête (10) par rapport au corps (20).

2. Moteur à engrenages selon la revendication 1, dans lequel lesdits moyens d'adaptation adaptent un certain nombre de raccordements (30, 31, 32) de la pièce de tête identique au nombre de raccordements (50, 51, 52) du corps.

3. Moteur à engrenages selon la revendication 1 ou 2, dans lequel lesdits moyens d'adaptation adaptent des raccordements électriques.

4. Moteur à engrenages selon l'une quelconque des revendications précédentes, dans lequel lesdits moyens d'adaptation adaptent des raccordements mécaniques.

5. Moteur à engrenages selon l'une quelconque des revendications précédentes, dans lequel lesdits moyens d'adaptation comprennent des connecteurs de contact (45, 55).

6. Moteur à engrenages selon la revendication 5, dans lequel lesdits connecteurs sont des connecteurs à ajustement rapide.

7. Moteur à engrenages selon l'une quelconque des revendications précédentes, dans lequel ladite pièce de tête (10) et ledit corps (20) ont une surface de contact sur laquelle lesdits moyens d'adaptation sont agencés.

8. Moteur à engrenages selon l'une quelconque des revendications précédentes, dans lequel lesdits moyens d'adaptation sont du type à raccordement mâle / femelle.

9. Moteur à engrenages selon l'une quelconque des revendications précédentes, dans lequel lesdits moyens d'adaptation comprennent des dispositifs de couplage qui fournissent un raccordement sans contact (145, 155).

10. Moteur à engrenages selon l'une quelconque des revendications précédentes, dans lequel lesdits moyens d'adaptation sont agencés sur un élément de couplage mâle (14) et sur un élément de couplage femelle (24) correspondant.

11. Moteur à engrenages selon la revendication 10, dans lequel lesdits éléments de couplage sont insérés les uns à l'intérieur des autres suite à l'assemblage du moteur à engrenages.

12. Moteur à engrenages selon les revendications précédentes, dans lequel des moyens de fixation (93) bloquent la pièce de tête (10) et le corps (20).

13. Moteur à engrenages selon la revendication 12, dans lequel lesdits moyens de fixation comprennent des reliefs de guidage (18) agencés sur la pièce de tête (10) et/ou sur le corps (20) et des sièges (26) correspondants.

14. Moteur à engrenages selon l'une quelconque des revendications précédentes, dans lequel les moyens d'adaptation comprennent une unité de traitement de données.

15. Moteur à engrenages selon l'une quelconque des revendications précédentes, dans lequel ladite pièce de tête (10) comprend en outre des cartes électroniques et/ou des encodeurs et/ou un récepteur de commande à distance et/ou un mécanisme de commande d'urgence.

16. Adaptateur pour un moteur à engrenages (100) pour des volets à enroulement pouvant permettre d'interchanger une pièce de tête (10) de moteur à engrenages assemblée sur un corps (20) de moteur à engrenages afin de former ledit moteur à engranges, si ladite pièce de tête comprend un régulateur électronique pour les positions de fin de course des volets à enroulement ou un régulateur mécanique.

17. Adaptateur selon la revendication 16, dans lequel ladite pièce de tête (10) comprend en outre des cartes électroniques et/ou des encodeurs et/ou un récepteur de commande à distance et/ou un mécanisme de commande d'urgence.
